# EUROPÄISCHE PATENTANMELDUNG

(11) **EP 0 788 897 A2**
(43) Veröffentlichungstag der Anmeldung: **13.08.1997**
(21) Anmeldenummer: 96114035.7
(22) Anmeldetag: 03.09.1996
(51) Int. Cl.: B60B 33/02, B62B 3/00

(54) **Transportgestell**

(30) Priorität: 09.09.1995 DE 19533463; 12.10.1995 DE 29516190 U
(71) Anmelder: Wanzl Metallwarenfabrik GmbH, D-89336 Leipheim (DE)
(72) Erfinder: Heinisch, Klaus, 86513 Ursberg (DE)

(57) **Zusammenfassung**

Die Erfindung betrifft ein von Hand bewegbares, fahrbares und zum Transport von Gütern, Gegenständen und dergleichen bestimmtes Transportgestell (1), das mit wenigstens drei Rollen (2) ausgestattet ist, deren Radgabeln (3) jeweils um eine vertikale Achse (4) verschwenkbar gelagert sind. Es wird vorgeschlagen innerhalb des von den vertikalen Achsen (4) der Rollen (2) umspannten Grundrisses (8) eine ebenfalls mit einer um eine vertikale Achse (4') schwenkbaren Radgabel (3) ausgestattete Rolle (5) und eine mit der Rolle (5) in Wirkverbindung stehende Lenkarretiereinrichtung (7) vorzuschen, wobei die Lenkarretiereinrichtung (7) auf die wechselnde Laufrichtung des Laufrades (6) der Rolle (5) reagierend in ebenso wechselnder Weise die Radgabel (3) der Rolle (5) entweder arretiert oder zum Verschwenken um die horizontale Achse (4') freigibt.

## Beschreibung

Die Erfindung betrifft ein von Hand bewegbares, fahrbares und zum Transport von Gütern, Gegenständen und dergleichen bestimmtes Transportgestell, das mit wenigstens drei Rollen ausgestattet ist, deren Radgabeln jeweils um eine vertikale Achse verschwenkbar gelagert sind.

Transportgestelle dieser Art sind als Transportwagen, Plattformwagen, Einkaufswagen, Gepäcktransportwagen, Rollgestelle oder dergleichen bekannt. Das Ausstatten solcher Transportgestelle mit drei sogenannten Lenkrollen, gewöhnlich jedoch mit vier Rollen, deren Radgabeln um vertikale Achsen drehbar gelagert sind, erlaubt es, solche Gestelle allseits zu bewegen. Die Rangiermöglichkeiten dieser Gestelle sind damit äußerst vielseitig. Allerdings besitzen mit besagten Rollen ausgestattete Transportgestelle einen entscheidenden Nachteil, der dann spürbar wird, wenn es gilt, ein Transportgestell quer zu einer geneigten Fahrbahn zu bewegen. In diesem Falle hat das Transportgestell das Bestreben, quer zur vorgesehenen Fahrtrichtung abwärts zu gleiten, so daß der Benutzer des Transportgestelles große Mühe hat, das Transportgestell in der vorgesehenen Fahrtrichtung zu halten. Tauscht man die Rollen zweier benachbarter Rollen durch solche Rollen aus, deren Radgabeln nicht um eine vertikale Achse verschwenkbar sind -in Fachkreisen werden diese Rollen als Bockrollen bezeichnet- läßt sich ein Transportgestell leichter quer zu einer geneigten Fahrbahnfläche bewegen. Allerdings leidet dann wieder die eingangs beschriebene optimale Rangiermöglichkeit der Transportgestelle, da beliebige Seitenbewegungen der Transportgestelle nur noch eingeschränkt ausgeführt werden können. Man hat deshalb Rollen entwickelt, deren schwenkbare Radgabeln durch eine auf die Laufrichtung der Laufräder reagierende Lenkarretiereinrichtung arretierbar und wieder lösbar ist. Ersetzt man zwei übliche Rollen, deren Radgabeln verschwenkbar sind, durch zwei mit einer Lenkarretiereinrichtung ausgestattete Rollen, so werden bei Vorwärtsfahrt des Transportgestelles die Radgabeln dieser Rollen in Vorwärtsfahrt ausgerichtet arretiert, so daß sehr leicht quer zu geneigten Fahrbahnflächen gefahren werden kann, während bei Rückwärtsfahrt die Radgabeln gelöst und damit schwenkbar sind, so daß die Rangiermöglichkeiten der Transportgestelle größer sind als bei Transportgestellen, die zwei Rollen mit immer arretierten Radgabeln (Bockrollen) aufweisen.
Nun gibt es Transportgestelle, die nicht als klassische Transportwagen ausgebildet sind, sondern eine mit Rollen ausgestaltete Plattform aufweisen, von der sich Wände nach oben erstrecken können, die wiederum weitere Abstelleinrichtungen tragen können. Solche Transportgestelle sind unter der Bezeichnung 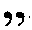 fahrbare Transportcontainer" bekannt. Diese Transportgestelle werden bevorzugt bei der Warenverteilung eingesetzt. So z.B. im Einzelhandel, wo die Transportgestelle mit Ware beladen, anschließend auf einem LKW abgestellt zu SB-Geschäften gefahren werden, um dort abgeladen zu werden. Diese Transportgestelle besitzen keine Schiebeeinrichtungen wie man sie von herkömmlichen Transport- oder Einkaufswagen her kennt. Vielmehr werden diese Transportgestelle zum Rangieren an den Wänden gepackt und dann geschoben oder bewegt. Es ist leicht vorstellbar, daß diese Bewegungen nicht nur geradlinig in Schieberichtung verlaufen, sondern sehr häufig an Ort und Stelle dann vorgenommen werden müssen, wenn es gilt, ein Transportgestell in eine Lücke zu manövrieren. Dies geschieht beim Beladen eines LKW mit den Transportgestellen ebenso wie bei deren Abstellen im Lager oder auf Verkaufsflächen von SB-Geschäften.

Es ist Aufgabe der Erfindung, ein gattungsgemäßes Transportgestell so weiterzuentwickeln, daß mit ihm ohne große Kraftanstrengung quer zu einer geneigten Fahrbahnstrecke gefahren werden kann und daß es bei passender Handhabung trotzdem allseits leicht bewegbar ist.

Zur Lösung dieser Aufgabe schlägt die Erfindung vor, innerhalb des von den vertikalen Achsen der Rollen umspannten Grundrisses eine ebenfalls mit einer um eine vertikale Achse schwenkbaren Radgabel ausgestattete weitere Rolle und eine mit dieser Rolle in Wirkverbindung stehende Lenkarretiereinrichtung vorzusehen, wobei die Lenkarretiereinrichtung auf die wechselnde Laufrichtung des Laufrades der weiteren Rolle reagierend in ebenso wechselnder Weise die Radgabel dieser Rolle entweder arretiert oder zum Verschwenken um die horizontale Achse freigibt.

Der Vorteil der Erfindung zeigt sich um so deutlicher, je näher die vorgeschlagene weitere Rolle zusammen mit ihrer Lenkarretiereinrichtung am Mittelpunkt des von den übrigen Rollen umspannten Grundrisses angeordnet ist. Ein derart ausgestattetes Transportgestell läßt sich auf der Stelle ebenso leicht manövrieren, wie auch quer zu geneigten Fahrbahnflächen geradeaus schieben oder ziehen. Ein Abstellen solcher Transportgestelle in Ecken, Lücken oder schmalen Gängen läßt sich einfacher durchführen als dies bei bisher bekannten Transportgestellen der Fall ist.

Die Erfindung wird anhand eines Ausführungsbeispieles näher erläutert. Es zeigt
Fig. 1 ein Transportgestell in räumlicher Darstellung sowie
Fig. 2 das gleiche Transportgestell in einer Draufsicht.

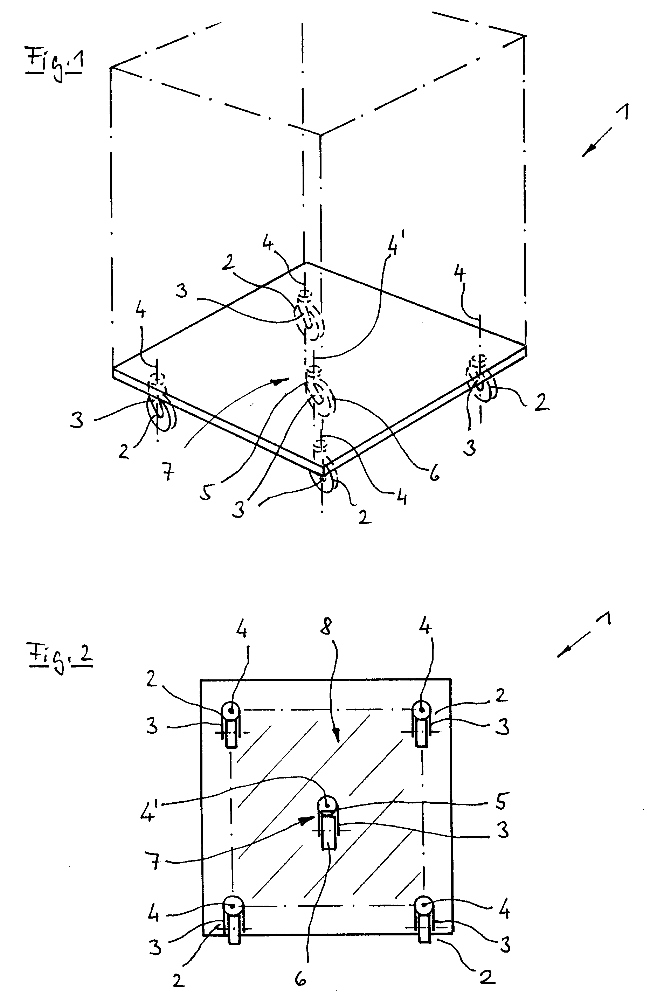

Das sehr stark vereinlachte und vor allem schematisch dargestellte Transportgestell 1 umfaßt alle Arten von fahrbaren Transportgestellen 1, die von Hand bewegbar sind. Dazu zählen insbesondere alle fahrbaren Plattformen, wie in Fig. 1 gezeigt, alle Transportcontainer, von deren Plattform sich Wände oder Rahmen nach oben erstrecken und die zum Tragen weiterer Abstelleinrichtungen oder dergleichen bestimmt sind. Unter Transportgestelle 1 im Sinne der Neuerung werden auch alle Transportwagen, Einkaufswagen, Gepäcktransportwagen oder sonstige Rollgestelle verstanden. Alle diese zum Transport von Gütern, Gegenständen, Ware usw. bestimmten Transportgestelle 1 sind mit wenigstens drei Rollen 2 ausgestattet, deren Radgabeln 3 in bekannter Weise jeweils um eine horizontale Achse 4 verschwenkbar sind. Solche Rollen 2 werden üblicherweise als Lenkrollen bezeichnet. Die Rollen 2 sind wie üblich, in regelmäßigen Abständen am Transportgestell 1 angeordnet. Innerhalb des von den vertikalen Achsen 4 der Rollen 2 umspannten Grundrisses 8, vgl. Fig. 2, ist eine Rolle 5 angeordnet, die sich ebenfalls auf der Laufebene der Rollen 2 befindet und die ebenfalls mit einer um eine vertikale Achse 4' schwenkbaren Radgabel 3 ausgestattet ist. Mit der Rolle 5 steht eine Lenkarretiereinrichtung 7 in Wirkverbindung. Die nicht näher dargestellte Lenkarretiereinrichtung 7 steht in Kontakt mit dem in der Radgabel 3 gelagerten Laufrad 6 der Rolle 5. In bekannter Weise reagiert die Lenkarretiereinrichtung 7 auf die Laufrichtung des Laufrades 6. Das Drehen des Laufrades 6 in die eine Richtung bewirkt z.B. ein Arretieren der Radgabel 3 der Rolle 5 durch die Lenkarretiereinrichtung 7, so daß die Rolle 5 und damit deren Radgabel 3 konstant eine vorbestimmte Laufrichtung einnimmt. Ein Drehen des Laufrades in die andere Richtung veranlaßt hingegen ein Lösen der Radgabel 3 der Rolle 5 durch die Lenkarretiereinrichtung 7, so daß sich die Radgabel 3 der Rolle 5 um die vertikale Achse 4 verschwenken läßt. Eine detaillierte Beschreibung sowohl der Rolle 5, in Fachkreisen auch 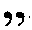 Lenk-Bock-Rolle" genannt, und der Lenkarretiereinrichtung 7 erübrigt sich an dieser Stelle, da beide z.B. in den Patentschriften JP 55-156702, GB 2 106 378, EP 0 370 716, EP 0 424 234 und EP 0 562 264 ausführlichst beschrieben sind. Die Lenkarretiereinrichtung 7 kann kompletter Bestandteil der Rolle 5 sein. Es ist aber auch möglich, und wie in der EP 0 562 264 aufgezeigt, einen Teil der Lenkarretiereinrichtung 7 an der Rolle 5 und den restlichen Teil am Transportgestell 1 vorzusehen. Wie bereits angedeutet, zeigt sich die vorteilhafte Wirkung der Rolle 5 am besten dann, wenn diese im Zentrum des Grundrisses 8, also in gleichen Abständen zu den Rollen 2 angeordnet ist. Geringe Abweichungen von dieser Ideallage sind unbedeutend und beeinflussen die durch die Erfindung erzielten Vorteile nicht. Wesentlich bleibt, daß die innerhalb des Grundrisses 8 angeordnete Rolle 5 so in Wirkverbindung mit der Lenkarretiereinrichtung 7 steht, daß diese auf die wechselnde Laufrichtung des Laufrades 6 der Rolle 5 reagierend in ebenso wechselnder Weise die Radgabel 3 der Rolle 5 entweder arretiert oder zum Verschwenken um die vertikale Achse 4' freigibt. Dabei kann die Lenkarretiereinrichtung 7 so ausgebildet sein, daß die Radgabel 3 der Rolle 5 in zwei, bevorzugt entgegengesetzten, oder in mehr als zwei Laufrichtungen weisend arretierbar ist. Um Bodenunebenheiten beim Fahren des Transportgestelles 1 ausweichen zu können erweist es sich als zweckmäßig, die Rolle 5 oder deren Laufrad 6 exakt oder annähernd vertikalbeweglich am Transportgestell 1 anzuordnen.

Lösungsansätze hierzu lassen sich für den Fachmann aus der EP 0 352 647 und aus der US 4, 580, 800 entnehmen.

## Patentansprüche

1. Von Hand bewegbares, fahrbares und zum Transport von Gütern, Gegenständen und dergleichen bestimmtes Transportgestell, das mit wenigstens drei Rollen ausgestattet ist, deren Radgabeln jeweils um eine vertikale Achse verschwenkbar gelagert sind, dadurch **gekennzeichnet**, daß innerhalb des von den vertikalen Achsen (4) der Rollen (2) umspannten Grundrisses (8) eine ebenfalls mit einer um eine vertikale Achse (4') schwenkbaren Radgabel (3) ausgestattete Rolle (5) und eine mit der Rolle (5) in Wirkverbindung stehende Lenkarretiereinrichtung (7) vorgesehen sind, wobei die Lenkarretiereinrichtung (7) auf die wechselnde Laufrichtung des Laufrades (6) der Rolle (5) reagierend in ebenso wechselnder Weise die Radgabel (3) der Rolle (5) entweder arretiert oder zum Verschwenken um die horizontale Achse (4') freigibt.

2. Transportgestell nach Anspruch 1, dadurch **gekennzeichnet**, daß die Rolle (5) in gleichen Abständen zu den Rollen (2) am Transportgestell (1) angeordnet ist.

3. Transportgestell nach Anspruch 1 oder 2, dadurch **gekennzeichnet**, daß die Radgabel (3) der Rolle (5) durch die Lenkarretiereinrichtung (7) in mehr als eine, bevorzugt in zwei entgegengesetzte Richtungen weisend arretierbar ist.

4. Transportgestell nach einem der Ansprüche 1 bis 3, dadurch **gekennzeichnet**, daß die Rolle (5) oder deren Laufrad (6) vertikalbeweglich am Transportgestell (1) angeordnet sind.
